# EUROPÄISCHE PATENTSCHRIFT

(11) **EP 2 794 334 B1**
(45) Veröffentlichungstag und Bekanntmachung des Hinweises auf die Patenterteilung: **29.08.2018**
(21) Anmeldenummer: 12779035.0
(22) Anmeldetag: 24.10.2012
(51) Int. Cl.: H02M 7/5387, H02M 1/32, H02M 1/36, B60L 3/04

(54) **STEUERVORRICHTUNG FÜR HALBLEITERSCHALTER EINES WECHSELRICHTERS UND VERFAHREN ZUM ANSTEUERN EINES WECHSELRICHTERS**
CONTROL DEVICE FOR SEMICONDUCTOR SWITCH ON AN INVERTER AND METHOD FOR THE ACTUATION OF AN INVERTER
DISPOSITIF DE COMMANDE POUR COMMUTATEUR À SEMI-CONDUCTEUR D'UN ONDULEUR ET PROCÉDÉ PERMETTANT DE COMMANDER UN ONDULEUR

(30) Priorität: 20.12.2011 DE 102011089316
(43) Veröffentlichungstag der Anmeldung: 29.10.2014
(73) Patentinhaber: Robert Bosch GmbH, 70442 Stuttgart (DE)
(72) Erfinder: Eberlein, Edwin, 70197 Stettgard (DE); SCHOENKNECHT, Andreas, 71272 Renningen (DE)
(86) Internationale Anmeldenummer: PCT/EP2012/071034
(87) Internationale Veröffentlichungsnummer: WO 2013/091949

(56) Entgegenhaltungen:
- WO-A1-2011/142373
- JP-A- 2003 348 856
- US-A1- 2005 146 295
- US-A1- 2011 080 149
- US-A1- 2011 221 374
- US-A1- 2011 234 176

## Beschreibung

Die Erfindung betrifft eine Steuervorrichtung für Halbleiterschalter eines Wechselrichters und ein Verfahren zum Ansteuern eines Wechselrichters, insbesondere zum Betreiben eines Wechselrichters in einem Schnellentladebetrieb.

### Stand der Technik

Elektro- und Hybridfahrzeuge weisen häufig leistungselektronische Schaltungskomponenten im Antriebssystem zwischen Traktionsbatterie und der elektrischen Maschine auf, welche in der Regel als Spannungszwischenkreisumrichter aufgebaut sind. Dabei dient ein Gleichspannungszwischenkreis als Koppelglied zwischen Traktionsbatterie und einem Wechselrichter, welcher zur Übertragung von elektrischer Leistung aus dem Gleichspannungszwischenkreis auf die elektrische Maschine angesteuert werden kann.

Wechselrichter können beispielsweise als Vollbrückenschaltung mit einer Anzahl von Brückenzweigen mit je zwei Halbleiterschaltern ausgeführt sein. Dabei können die mit einem ersten Ausgangsanschluss des Gleichspannungszwischenkreises verbundenen Halbleiterschalter der Brückenzweige jeweils High-Side-Schalter und die mit dem zweiten Ausgangsanschluss des Gleichspannungszwischenkreises verbundenen Halbleiterschalter der Brückenzweige jeweils Low-Side-Schalter bezeichnet werden. Als Halbleiterschalter können dabei beispielsweise IGBT-Module (Bipolartransistoren mit isolierter Gate-Elektrode) mit antiparallel geschalteter Diode oder MOSFETs (Metalloxidfeldeffekttransistoren) verwendet werden.

Zur Ansteuerung des Wechselrichters werden Steuerregelungen verwendet, welche Schaltsignale für die Halbleiterschalter erzeugen. Im Fehlerfall werden aus Sicherheitsgründen verschiedene Anforderungen an die Steuerregelungen gestellt. Beispielsweise kann es erforderlich sein, die Motorwicklungen der elektrischen Maschine im Fehlerfall sicher kurz zu schließen. Dies kann durch ein Schließen aller High-Side-Schalter und Öffnen aller Low-Side-Schalter (oder umgekehrt) bewerkstelligt werden, was auch als "Aktiver Kurzschluss" bezeichnet wird.

Darüber hinaus ist es im Fehlerfall notwendig, den Gleichspannungszwischenkreis schnell und zuverlässig zu entladen, insbesondere auch bei einem Ausfallen von Versorgungsspannungen in der Steuerregelung. Dies kann durch eine Schnellentladung bewerkstelligt werden. Eine derartige Schnellentladung wird normativ innerhalb einer maximalen Schnellentladezeit von fünf Sekunden gefordert, um die elektrische Betriebssicherheit des Fahrzeugs gewährleisten zu können.

Die Druckschrift US 2005/0231171 A1 offenbart ein elektrisches Antriebssystem mit einem elektrischen Motor, einem Pulswechselrichter und einem Zwischenkreiskondensator. Der Zwischenkreiskondensator kann über einen entsprechenden Schalterbetrieb des Pulswechselrichters kontrolliert entladen werden.

Die Druckschrift US 2011/0221374 A1 offenbart ein Entladesystem für eine Batterie in einem elektrisch betreibbaren Fahrzeug, welches einen Wechselrichter des Fahrzeugs für die Entladung nutzt, indem es die Halbleiterschalter in einem pulsweitenmodulierten Betrieb im ungesättigtem Zustand ansteuert.

Die Druckschrift US 2011080149 A1 offenabrt eine Steuervorrichtung für einen Stromrichter. Zum Entladen eines Zwischenkreiskondensators in dem Stromrichter können die Schaltelemente des Strmrichters mit einer verrichterten Steuerspannung angesteuert werden.

Die Druckschrift US 2011234176 A1 offenbart eine Entaldevorrichtung für einen Zwischenkreiskondensator in einem Wechselrichter, wobei die Entladesteuerung unabhängig von der Ansteuerungschaltung des Wechselrichterbetriebs vorgesehen ist.

### Offenbarung der Erfindung

Die vorliegende Erfindung schafft gemäß einem Aspekt eine Steuervorrichtung zum Ansteuern eines Halbleiterschalters eines Wechselrichters, mit den Merkmalen des Patentanspruchs 1.

Gemäß einem weiteren Aspekt schafft die vorliegende Erfindung ein Antriebssystem für eine n-phasige elektrische Maschine, wobei n ≥ 1, mit den Merkmalen des Patentanspruch 6.

Gemäß einem weiteren Aspekt schafft die vorliegende Erfindung ein Verfahren zum Ansteuern eines Wechselrichters, mit den Merkmalen des Patentanspruchs 9.

### Vorteile der Erfindung

Eine Idee der vorliegenden Erfindung ist es, eine Steuervorrichtung für Halbleiterschalter eines Wechselrichters in einem elektrisch betriebenen Fahrzeug auszugestalten, die eine Schnell- oder Notentladung umsetzen kann, ohne auf zusätzliche zu entwärmende Bauteile angewiesen zu sein oder erhöhten Schaltungsaufwand zu benötigen. Die Schnell- oder Notentladung wird dabei über in dem Wechselrichter ohnehin vorhandenen Halbleiterschalter durchgeführt. Dadurch entfällt die Notwendigkeit, dedizierte Notentladeschaltungen vorzusehen, was eine erhebliche Kosten- und Bauraumersparnis mit sich bringen kann.

Ein Vorteil der Erfindung ist es, dass ein mit einer erfindungsgemäßen Steuervorrichtung ausgestalteter Wechselrichter, welcher eine Vielzahl von Brückenzweigen mit jeweils zwei Halbleiterschaltern umfasst, derart angesteuert werden kann, dass jeweils einer der Halbleiterschalter einer bestimmten Anzahl von Brückenzweigen "angetaktet" wird, das heißt, dass das Ansteuersignal aus kurzen Ansteuerpulsen besteht, deren Pulslänge gerade so kurz gewählt sind, dass der Halbleiterschalter noch nicht vollständig leitfähig geschaltet wird, sondern sich kurzzeitig in einem Übergangszustand zwischen Sperrzustand und Leitzustand befindet. Während dieser Zeit kann Energie aus dem Zwischenkreiskondensator beim Fließen eines Stroms durch die jeweiligen Halbleiterschalter in Wärme umgewandelt und so die Spannung im Zwischenkreis rasch und effektiv abgebaut werden. Dies bietet den Vorteil, dass ein an die Eingangsanschlüsse des Wechselrichters angeschlossener Zwischenkreiskondensator schnell und zuverlässig über die Halbleiterschalter entladen werden kann, ohne dass durch das Entladen Ströme durch eine angeschlossene elektrische Maschine fließen.

Besonders vorteilhaft ist dabei, dass zum Einen keine weiteren Schaltungskomponenten zum Entladen des Zwischenkreiskondensators verbaut werden müssen, was Platz und Fertigungskosten spart. Zum anderen sind die Halbleiterschalter ohnehin sehr gut thermisch an die Umgebung angebunden, so dass ein Entladen des Zwischenkreiskondensators über den Wechselrichter keine Überhitzung des Antriebssystems verursacht.

Gemäß einer Ausführungsform der erfindungsgemäßen Steuervorrichtung kann die Pulslänge derart einstellbar sein, dass der Halbleiterschalter bei einem Ansteuern mit dem Steuersignal einen vorbestimmten Stromwert aufweist.

Gemäß einer weiteren Ausführungsform der erfindungsgemäßen Steuervorrichtung kann die Treiberschaltung einen einstellbaren Steuerwiderstand zum Erzeugen des Steuersignals aufweisen, und die Ansteuerschaltung dazu ausgelegt sein, in Abhängigkeit von dem Regelsignal ein Stellsignal zum Einstellen des einstellbaren Steuerwiderstands zu erzeugen und in die Treiberschaltung einzuspeisen.

Gemäß einer weiteren Ausführungsform kann die Steuervorrichtung zum Ansteuern eines IGBT-Schalters ausgelegt sein.

Gemäß einer weiteren Ausführungsform kann der Wechselrichter eine Halbbrückenschaltung aufweisen. Dabei kann die Ansteuerschaltung dazu ausgelegt sein, jeweils einen der Halbleiterschalter einer Halbbrücke mit dem Treibersignal anzusteuern und den anderen der Halbleiterschalter der Halbbrücke dauerhaft zu schließen. Dies ist besonders vorteilhaft für die Implementierung eines aktiven Kurzschlusses des Wechselrichters, bei dem Energie aus dem Zwischenkreiskondensator beim Fließen eines Stroms durch einen der jeweiligen Halbleiterschalter einer Halbbrücke in Wärme umgewandelt und so die Spannung im Zwischenkreis rasch und effektiv abgebaut werden kann.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines elektrischen Antriebssystems eines Fahrzeugs gemäß einer Ausführungsform der Erfindung;
- Fig. 2: eine schematische Darstellung einer Steuervorrichtung für einen Halbleiterschalter gemäß einer weiteren Ausführungsform der Erfindung;
- Fig. 3: eine schematische Darstellung einer Steuervorrichtung für einen Halbleiterschalter gemäß einer weiteren Ausführungsform der Erfindung;
- Fig. 4: eine schematische Darstellung einer Steuervorrichtung für einen Halbleiterschalter gemäß einer weiteren Ausführungsform der Erfindung;
- Fig. 5: eine schematische Darstellung einer Steuervorrichtung für einen Halbleiterschalter gemäß einer weiteren Ausführungsform der Erfindung;
- Fig. 6: eine schematische Darstellung einer Steuervorrichtung für einen Halbleiterschalter gemäß einer weiteren Ausführungsform der Erfindung;
- Fig. 7: eine schematische Darstellung eines Signaldiagramms eines Steuersignals für einen Halbleiterschalter gemäß einer weiteren Ausführungsform der Erfindung; und
- Fig. 8: eine schematische Darstellung eines Verfahrens zum Ansteuern eines Wechselrichters gemäß einer weiteren Ausführungsform der Erfindung.

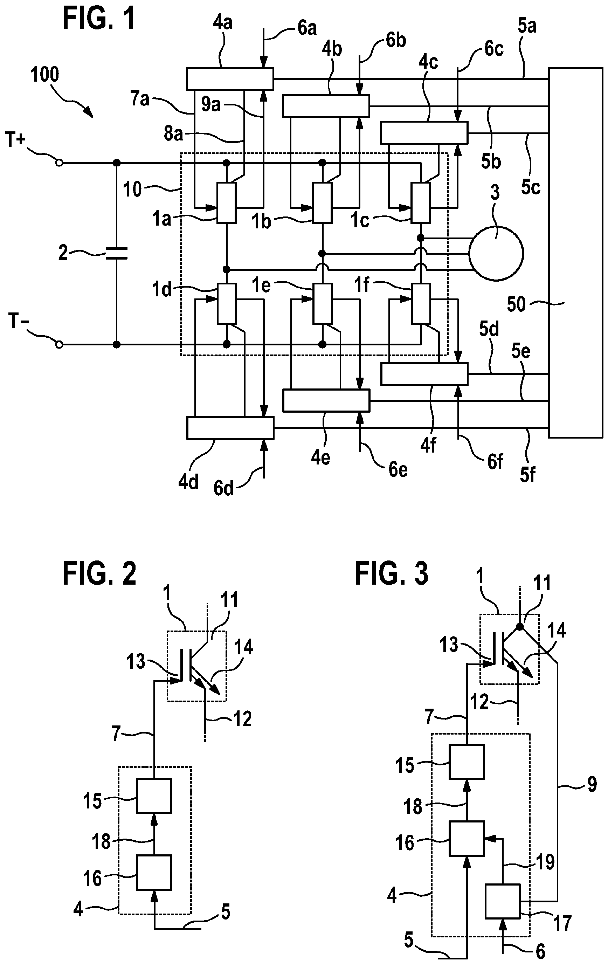

Fig. 1 zeigt eine schematische Darstellung eines elektrischen Antriebssystems 100 eines Fahrzeugs. Das elektrische Antriebssystem 100 umfasst zwei Eingangsanschlüsse T+ und T-, welche beispielsweise durch eine Energiespeichereinrichtung wie eine Hochspannungsbatterie oder eine Traktionsbatterie des Fahrzeugs mit Hochspannung versorgt werden können. Die Eingangsanschlüsse T+ und T- sind mit einem Gleichspannungszwischenkreis verbunden, welcher einen Zwischenkreiskondensator 2 aufweist. Der Zwischenkreiskondensator 2 ist über Ausgangsanschlüsse mit Eingangsanschlüssen eines Wechselrichters 10, beispielsweise eines Pulswechselrichters 10, verbunden. Der in Fig. 1 dargestellte Spannungszwischenkreisumrichter mit dem Zwischenkreiskondensator 2 und dem Wechselrichter 10 ist beispielhaft als dreiphasiger Umrichter dargestellt, das heißt, der Wechselrichter 10 umfasst drei Brückenzweige mit jeweils zwei Halbleiterschaltern. Der erste Brückenzweig umfasst beispielsweise die Halbleiterschalter 1a und 1d, der erste Brückenzweig beispielsweise die Halbleiterschalter 1b und 1e und der dritte Brückenzweig beispielsweise die Halbleiterschalter 1c und 1f. Dabei werden die Halbleiterschalter 1a, 1b, 1c einer Brückenseite als High-Side-Schalter bezeichnet, und die Halbleiterschalter 1d, 1e, 1f der anderen Brückenseite als Low-Side-Schalter. Es sollte dabei klar sein, dass jede andere Anzahl von Brückenzweigen bzw. Phasen des Spannungszwischenkreisumrichters ebenso möglich ist, und dass die Bezeichnung der Halbleiterschalter 1a bis 1f als High-Side- und Low-Side-Schalter nur beispielhaft gewählt ist.

Die in Figur 1 dargestellten Halbleiterschalter 1a bis 1f können dabei beispielsweise Feldeffekttransistoren (FETs) aufweisen. In einer möglichen Ausführungsform sind die Halbleiterschalter jeweils IGBTs (Insulated Gate Bipolar Transistors), es ist jedoch ebenso möglich, andere Halbleiterschalter in entsprechender Form vorzusehen, zum Beispiel in Form von JFETs (Junction Field-Effect Transistors) oder MOSFETs (Metal Oxide Semiconductor Field-Effect Transistors). Wenn die Halbleiterschalter 1a bis 1f IGBT-Schalter aufweisen, kann es vorgesehen sein, zu jedem der IGBT-Schalter eine in Fig. 1 aus Gründen der Übersichtlichkeit nicht dargestellte Diode anti-parallel zu schalten.

Das elektrische Antriebssystem 100 weist ferner eine Steuerregelung 50 auf, welche dazu ausgelegt ist, Schaltsignale 5a bis 5f zu erzeugen, welche ein schaltendes Ansteuern der Halbleiterschalter 1a bis 1f codieren. Die Schaltsignale 5a bis 5f können dabei beispielsweise einen logisch niedrigen Pegel aufweisen, wenn die Halbleiterschalter 1a bis 1f geöffnet sein sollen, und einen logisch hohen Pegel, wenn die Halbleiterschalter 1a bis 1f geschlossen sein sollen. Die Steuerregelung 50 speist die Schaltsignale 5a bis 5f in entsprechende Steuervorrichtungen 4a bis 4f, welche jeweils für die Ansteuerung eines der Halbleiterschalter 1a bis 1f verantwortlich sind. Im Folgenden wird die Kopplung der Steuervorrichtung 4a mit dem zugeordneten Halbleiterschalter 1a erläutert, wobei jede der übrigen Steuervorrichtungen 4b bis 4f entsprechend gekoppelt sein kann.

Die Steuervorrichtung 4a weist einen Steuerausgang auf, über welchen ein Steuersignal 7a an einen Steuereingang des Halbleiterschalters 1a abgegeben werden kann, um den Betrieb des Halbleiterschalters 1a zu steuern. Die Steuervorrichtung 4a kann über Messleitungen Messsignale 8a und/oder 9a erfassen. Das Messsignal 8a kann beispielsweise eine momentane Stromstärke durch den Halbleiterschalter 1a angeben. Dazu kann die Messleitung, über die das Messsignal 8a erfasst wird, beispielsweise mit einem Strommessausgang des Halbleiterschalters 1a gekoppelt sein. Das Messsignal 9a kann beispielsweise eine momentane Spannung an einem Verbindungsanschluss des Halbleiterschalters 1a angeben. Dazu kann die Messleitung, über die das Messsignal 9a erfasst wird, beispielsweise mit einem Kollektoranschluss des Halbleiterschalters 1a gekoppelt sein, insbesondere wenn der Halbleiterschaltuer 1a ein IGBT-Schalter ist. Das Messsignal 9a kann dabei für die Spannung an dem Zwischenkreiskondensator 2 repräsentativ sein.

Die Fig. 2 bis 6 zeigen schematische Darstellungen von Steuervorrichtungen 4 für einen Halbleiterschalter 1. Insbesondere sind in den Fig. 2 bis 6 beispielhafte Ausführungsformen der Steuervorrichtungen 4a bis 4f und der zugehörigen Halbleiterschalter 1a bis 1f in höherem Detail gezeigt. Die in den Fig. 2 bis 6 verwendeten Bezugszeichen können dabei jeweils mit Buchstaben von a bis f versehen werden, um die jeweiligen Komponenten des in Fig. 1 gezeigten elektrischen Antriebssystems 100 zu kennzeichnen.

Allgemein dienen die in den Fig. 2 bis 6 gezeigten Steuervorrichtungen 4 zum Ansteuern eines Halbleiterschalters 1, insbesondere eines Halbleiterschalters 1 eines Wechselrichters, wie beispielsweise des Wechselrichters 10 in Fig.1. Der Halbleiterschalter 1 ist in den Fig. 2 bis 6 beispielhaft als IGBT-Schalter gezeigt, welcher einen Kollektoranschluss 11, einen Emitteranschluss 12, einen Gate- oder Steuereingang 13 und einen Stromsensorausgang 14 aufweist. Über den Stromsensorausgang 14 kann ein Strommesssignal 9 abgeführt werden, welches die Stromstärke eines momentan durch den IGBT-Schalter 1 fließenden Stroms angibt. Der IGBT-Schalter 1 kann über den Steuereingang 13 durch Anlegen eines entsprechenden Steuersignals 7 mit einem bestimmten Spannungspegel in verschiedenen Betriebsmodi angesteuert werden. In einem Schaltbetrieb kann der IGBT-Schalter 1 nur in einem Sperr- oder Sättigungsbereich betrieben werden, das heißt, der IGBT-Schalter 1 ist entweder vollständig sperrend oder vollständig leitend. In einem Linear- oder Aktivbetrieb hingegen kann der IGBT-Schalter 1 in einem Verstärkungsbereich betrieben werden, das heißt, die Stromstärke eines Stroms durch den IGBT-Schalter 1 skaliert proportional oder im Wesentlichen proportional zu der an dem Steueranschluss anliegenden Spannung.

In der in Fig. 2 gezeigten beispielhaften Ausführungsfrom weist die Steuervorrichtung 4 eine Ansteuerschaltung 16 auf, welche dazu ausgelegt ist, in Abhängigkeit von einem durch eine Steuerregelung eines Wechselrichters erzeugten Schaltsignals 5 ein Treibersignal 18 zu erzeugen. Dabei kann in einem gewöhnlichen Schaltbetrieb des Wechselrichters das Treibersignal 18 im Wesentlichen dem Schaltsignal 5 entsprechen. Das Schaltsignal 5 kann beispielsweise einen logisch hohen Pegel aufweisen, wenn der IGBT-Schalter 1 geschlossen werden soll, und einen logisch niedrigen Pegel, wenn der IGBT-Schalter 1 geöffnet werden soll. Jede andere Ansteuerlogik ist dabei selbstverständlich ebenso möglich. In dem gewöhnlichen Schaltbetrieb ist es vorgesehen, dass der IGBT-Schalter 1 entweder vollständig sperrend oder vollständig leitend ist, so dass das Schaltsignal 5 für eine vorgegebenen Zeitspanne den jeweiligen logischen Pegel beibehält.

Die Steuervorrichtung 4 umfasst weiterhin eine Treiberschaltung 15, welche zwischen der Ansteuerschaltung 16 und einem Steuereingang 13 des IGBT-Schalters 1 gekoppelt ist, und welche dazu ausgelegt ist, das Treibersignal 18 zu empfangen und in Abhängigkeit von dem Treibersignal 18 ein Steuersignal 7 zu erzeugen, welches den IGBT-Schalter 1 ansteuert. Das Steuersignal 7 wird durch die Treiberschaltung 15 dann in den Steuereingang 13 des IGBT-Schalters 1 eingespeist. Die Treiberschaltung 15 kann dazu beispielsweise einen internen Steuer- oder Gatewiderstand aufweisen, über welchen die Verstärkung des Treibersignals 18 zum Erzeugen des Steuersignals 7 einstellbar ist.

In bestimmten Betriebsmodi des Wechselrichters kann es nun erforderlich sein, eine schnelle Entladung des Zwischenkreises vorzunehmen. Mit der Steuervorrichtung 4 kann ein IGBT-Schalter 1 selektiv "angetaktet" werden, das heißt, in einem gepulsten Betrieb angesteuert werden, in dem Ansteuerpulse in den Steuereingang 13 des IGBT-Schalters 1 eingespeist werden, deren Dauer so kurz ist, dass der IGBT-Schalter 1 noch nicht vollständig leitfähig geschaltet wird, sondern sich kurzzeitig in einem Übergangszustand zwischen Sperrzustand und Leitzustand befindet. Während dieser Zeit kann Energie aus dem Zwischenkreiskondensator beim Fließen eines Stroms durch den IGBT-Schalter 1 in Wärme umgewandelt und so die Spannung im Zwischenkreis rasch und effektiv abgebaut werden. Dies ermöglicht insbesondere das Einstellen eines Schnellentladebetriebs in einem derart angesteuerten Wechselrichter, wodurch in vorteilhafter Weise ein schnelles Entladen eines den Wechselrichter speisenden Zwischenkreiskondensators, beispielsweise des Zwischenkreiskondensators 2, erfolgen kann. Dabei ist es besonders vorteilhaft, dass die bereits vorhandenen Komponenten des Wechselrichters zur Entladung genutzt werden können, ohne dass zusätzliche Schaltungen oder Entladeelemente wie schaltbare Widerstände oder dergleichen verbaut werden müssten.

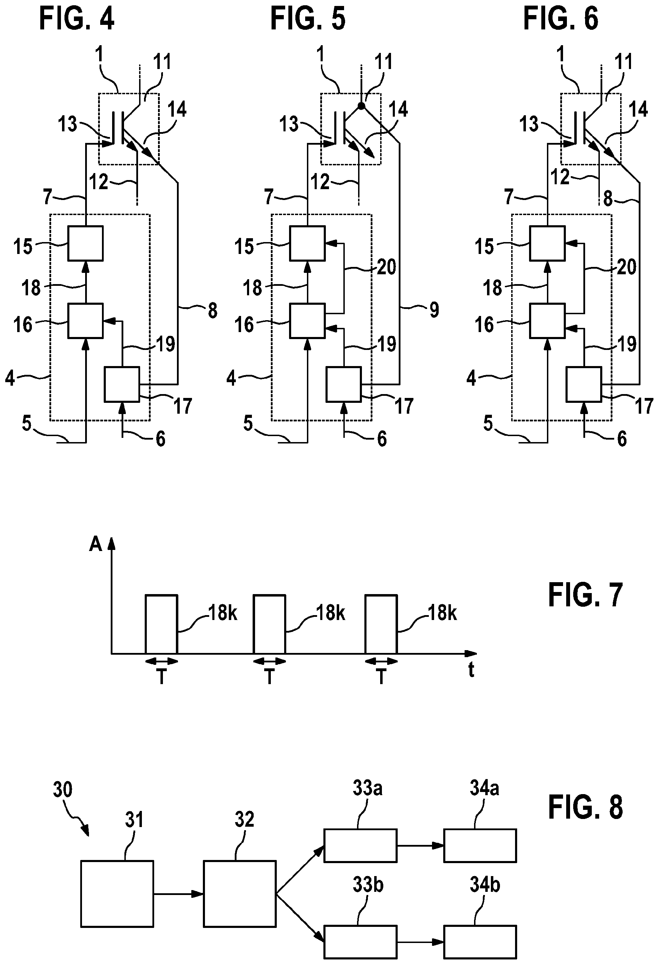

Um diesen Betriebsmodus zu realisieren, kann die Ansteuerschaltung 16 dazu ausgelegt sein, das Treibersignal 18 als eine Folge von Treibersignalpulsen mit einer vorbestimmten und einstellbaren Pulslänge zu erzeugen, so dass der IGBT-Schalter 1 bei einem Ansteuern mit dem Steuersignal 7 während der Pulslänge nicht vollständig leitfähig ist. Eine beispielhafte Möglichkeit für eine derartige Folge von Treibersignalpulsen 18k ist schematisch in Fig. 7 dargestellt. Die Treibersignalpulse 18k weisen dabei jeweils eine Pulslänge T auf. Diese Pulslänge T kann bezüglich der Ansteuerdauer in einem gewöhnlichen Steuerbetrieb der IGBT-Schalter 1 kurz sein. Beispielsweise kann die Schaltdauer eines IGBT-Schalters 1, während dessen der IGBT-Schalter 1 in einem Normalbetrieb geschlossen bzw. offen gehalten wird, etwa 100 µs betragen. Die Pulslänge T kann in diesem Fall wenige µs betragen, beispielsweise zwischen 0,2 µs und 5 µs. Dabei kann die Pulslänge T von den physikalischen Parametern des IGBT-Schalters 1 sowie der Treiberschaltung 15 abhängig sein.

Um die Ansteuerpulse, welche in den Steuereingang 13 des IGBT-Schalters 1 eingespeist werden, zu regeln, kann zusätzlich eine Regelschaltung 17 vorgesehen werden, welche mit der Ansteuerschaltung 16 gekoppelt ist, und welche dazu ausgelegt ist, ein Regelsignal 19 zum Regeln des Treibersignals 18 zu erzeugen, und in die Ansteuerschaltung 16 einzuspeisen. Eine derartige Regelschaltung 17 ist beispielhaft in den Fig. 3 bis 6 dargestellt. Die Regelschaltung 17 der Fig. 3 und 5 unterscheidet sich von der Regelschaltung der Fig. 4 und 6 dahingehend, dass die Regelschaltung 17 dazu ausgelegt ist, ein erstes Messsignal 9, welches die Zwischenkreisspannung repräsentiert, zu erfassen, und das Regelsignal 19 in Abhängigkeit von dem ersten Messsignal 9 zu erzeugen. Das erste Messsignal 9 kann dabei beispielsweise an dem Kollektoranschluss 11 des IGBT-Schalters 1 abgegriffen werden. Hingegen kann, wie in Fig. 4 und 6 gezeigt, auch ein zweites Messsignal 8, welches einen Strom durch den Halbleiterschalterrepräsentiert, erfasst, und das Regelsignal 19 in Abhängigkeit von dem zweiten Messsignal 8 erzeugt werden. Hierzu kann die Regelschaltung 17 mit dem Stromsensorausgang 14 des IGBT-Schalters 1 gekoppelt sein. Alternativ kann es auch möglich sein, die Regelschaltung 17 sowohl mit dem Stromsensorausgang 14 als auch mit dem Kollektoranschluss 11 des IGBT-Schalters 1 zu verbinden, und das Regelsignal 19 sowohl in Abhängigkeit von dem ersten Messsignal 9 als auch von dem zweiten Messsignal 8 zu erzeugen.

In allen Fällen kann die Pulslänge T der Treibersignalpulse 18k über das Regelsignal 19 eingeregelt werden. Wenn beispielsweise die Zwischenkreisspannung nicht oder in zu geringem Maße abnimmt, kann die Pulslänge T verlängert werden. Gleichermaßen kann beispielsweise bei einem zu hohem Strom durch den IGBT-Schalter 1 die Pulslänge T verringert werden. Über das erste Messsignal 9 kann beispielsweise ein Spannungseinbruch der Zwischenkreisspannung am Kollektoranschluss 11 des IGBT-Schalters 1 im Moment des Einschaltens des IGBT-Schalters 1 überwacht werden. Liegt kein Spannungseinbruch vor oder ist der Spannungseinbruch zu niedrig, kann die Pulslänge T verlängert werden. Generell kann das Regelverfahren der Regelschaltung 17 mit einer geringen Pulslänge T gestartet werden, um eine Überlastung des IGBT-Schalters 1 und damit eine mögliche Beschädigung zu vermeiden.

Die Regelschaltung 17 kann optional auch weitere externe Parameter 6 empfangen, welche in den Regelmechanismus mit einbezogen werden. Beispielsweise kann der externe Parameter 6 die Temperatur an dem IGBT-Schalter 1 umfassen.

Wie in den Fig. 5 und 6 schematisch dargestellt, kann zusätzlich zu der Regelschaltung 17 durch die Ansteuerschaltung 16 ein Stellsignal 20 zum Einstellen eines einstellbaren Steuerwiderstands der Treiberschaltung 15 erzeugt und in die Treiberschaltung 15 eingespeist werden. Das Stellsignal 20 kann dabei beispielsweise in Abhängigkeit von dem Regelsignal 19 erzeugt werden. Über das Stellsignal 20 kann der Widerstandswert des Steuerwiderstands der Treiberschaltung 15 selektiv erhöht werden, so dass der Wert der Ansteuerspannung, welche in den Steuereingang 13 des IGBT-Schalters 1 eingespeist wird, verringert werden kann. Der Steuerwiderstand kann dabei in beliebigen Stufen angepasst werden, so dass die Ansteuerspannung und damit der Stromfluss durch den IGBT-Schalter 1 über die Regelschaltung 17 selektiv geregelt werden kann.

Fig. 8 zeigt eine schematische Darstellung eines Verfahrens 30 zum Ansteuern eines Wechselrichters, insbesondere eines Wechselrichters 10 in dem in Fig. 1 dargestellten elektrischen Antriebssystem 100 eines elektrisch betriebenen Fahrzeugs. Das Verfahren 30 umfasst in einem ersten Schritt 31 ein Erzeugen eines Treibersignals für zumindest einen der Halbleiterschalter des Wechselrichters, wobei das Treibersignal eine Folge von Treibersignalpulsen aufweist. In einem zweiten Schritt 32 erfolgt dann ein Verstärken des Treibersignals zum Erzeugen eines Steuersignals welches den zumindest einen Halbleiterschalter ansteuert. Dabei weisen die Treibersignalpulse jeweils eine vorbestimmte und einstellbare Pulslänge auf, so dass der Halbleiterschalter bei einem Ansteuern mit dem Steuersignal während der Pulslänge nicht vollständig leitfähig ist.

In den Schritten 33a und 34a kann dann optional ein Erfassen eines ersten Messsignals, welches die Zwischenkreisspannung repräsentiert, und ein Erzeugen eines Regelsignals zum Regeln der Pulslänge der Treibersignalpulse in Abhängigkeit von dem ersten Messsignal erfolgen. Alternativ oder zusätzlich dazu kann in den Schritten 33b und 34b ein Erfassen eines zweiten Messsignals, welches einen Strom durch den zumindest einen Halbleiterschalter repräsentiert, und ein Erzeugen eines Regelsignals zum Regeln der Pulslänge der Treibersignalpulse in Abhängigkeit von dem zweiten Messsignal durchgeführt werden.

Das Verfahren 30 kann prinzipiell in jedem Betriebsmodus des Wechselrichters durchgeführt werden. Insbesondere kann das Verfahren 30 in einem gewöhnlichen Normalbetrieb des Wechselrichters durchgeführt werden. In diesem Fall kann beispielsweise in einem Freilaufmodus oder im Regelbetrieb einer oder mehrere der Halbleiterschalter, welche sich in einem geschlossenen Zustand befinden sollen, während dieser Zeitspanne gepulst angesteuert werden. Dieser bzw. diese Halbleiterschalter tragen dann zeitweilig zu einer Entladung des Zwischenkreiskondensators bei. Dabei ist ist darauf zu achten, dass die Spannungssignale, die durch den Wechselrichter ausgegeben werden, nicht oder zumindest nur geringfügig verfälscht werden.

Bei elektrischen Maschinen auf niedrigen Drehzahlen, beispielweise bei einer permanent erregten Synchronmaschine, kann bereits in einem Freilaufmodus eine Reduzierung der Zwischenkreisspannung vorteilhaft sein, um die Entstehung von unerwünschten Momenten in der Synchronmaschine zu vermeiden. Die Zwischenkreisspannung kann dabei beispielsweise auf einen von der Polradspannung abhängigen Wert mit dem Verfahren 30 vorab reduziert werden.

Besonders vorteilhaft ist es jedoch, das Verfahren 30 in einem "aktiven Kurzschluss" des Wechselrichters durchzuführen, das heißt, in einem Modus, in dem die Motorwicklungen der elektrischen Maschine im Fehlerfall sicher kurzgeschlossen werden können. Zum Beispiel kann nach einem Auftreten eines Fehlers, beispielsweise bei einem Ausfall der Spannungsversorgung der Steuerregelung, bei einem Unfall des Fahrzeugs oder bei sonstigen die Betriebssicherheit des elektrischen Antriebssystems gefährdenden Situationen, der "aktive Kurzschluss" aktiviert werden, so dass alle Halbleiterschalter einer Brückenseite der Brückenzweige, zum Beispiel die High-Side-Schalter, in einen geschlossenen Zustand und alle Halbleiterschalter der jeweils anderen Brückenseite der Brückenzweige, zum Beispiel die Low-Side-Schalter, in einen offenen Zustand versetzt werden. Es versteht sich, dass die Ansteuerung der High-Side- und Low-Side-Schalter jeweils auch umgekehrt erfolgen kann. Damit kann die elektrische Maschine sicher und zuverlässig über die geschlossenen Halbleiterschalter kurzgeschlossen werden.

Die in dem Zustand "aktiven Kurzschluss" jeweils offenen Halbleiterschalter, beispielsweise die Low-Side-Schalter, können statt in einem dauerhaft offenen Zustand über das Verfahren 30 "angetaktet" werden, das heißt, durch gepulsten Ansteuerbetrieb jeweils kurzzeitig in einen Zustand zwischen Sperr- und Leitfähigkeit versetzt werden. Dadurch fließt ein Strom durch die gepulst angesteuerten Halbleiterschalter, dessen Stromstärke beispielsweise über die Pulslänge der Treibersignalpulse auf einen gewünschten Wert eingestellt werden kann. Dadurch kann der Zwischenkreiskondensator über die Halbleiterschalter im gepulsten Betrieb entladen werden. Die Halbleiterschalter können dabei thermisch an eine Kühleinrichtung oder die Umgebungsluft des elektrischen Antriebssystems angebunden sein, so dass bei der Entladung entstehende Wärme schnell und sicher abgeführt werden kann. Prinzipiell ist es möglich, jede beliebige Anzahl von Halbleiterschaltern bzw. Brückenzweige in den Schnellentladebetrieb einzubeziehen, je nach gewünschter Entladedauer.

## Patentansprüche

1. Steuervorrichtung (4) zum Ansteuern eines Halbleiterschalters (1) eines Wechselrichters (10), mit:
einer Ansteuerschaltung (16), welche dazu ausgelegt ist, in Abhängigkeit von einem durch eine Steuerregelung (50) des Wechselrichters (10) erzeugten Schaltsignal (5) ein Treibersignal (18) zu erzeugen;
einer Treiberschaltung (15), welche zwischen der Ansteuerschaltung (16) und einem Steuereingang (13) des Halbleiterschalters (1) gekoppelt ist, und welche dazu ausgelegt ist, das Treibersignal (18) zu empfangen und in Abhängigkeit von dem Treibersignal (18) ein Steuersignal (7), welches den Halbleiterschalter (1) ansteuert, zu erzeugen und in den Steuereingang (13) des Halbleiterschalters (1) einzuspeisen; und
einer Regelschaltung (17), welche mit der Ansteuerschaltung (16) gekoppelt ist, und welche dazu ausgelegt ist, ein Regelsignal (19) zum Regeln des Treibersignals (18) zu erzeugen, und in die Ansteuerschaltung (16) einzuspeisen,wobei die Regelschaltung (17) dazu ausgelegt ist, ein erstes Messsignal (9) für die Zwischenkreisspannung zu erfassen, und das Regelsignal (19) in Abhängigkeit von dem ersten Messsignal (9) zu erzeugen, und/oder
dass die Regelschaltung (17) mit einem Stromsensorausgang (14) des Halbleiterschalters (1) gekoppelt ist, und dazu ausgelegt ist, ein zweites Messsignal (8) für einen Strom durch den Halbleiterschalter (1) zu erfassen, und das Regelsignal (19) in Abhängigkeit von dem zweiten Messsignal (8) zu erzeugen,
**dadurch gekennzeichnet, dass**
die Ansteuerschaltung (16) dazu ausgelegt ist, das Treibersignal (18) als eine Folge von Treibersignalpulsen (18k) mit einer vorbestimmten und einstellbaren Pulslänge (T) zu erzeugen, so dass der Halbleiterschalter (1) bei einem Ansteuern mit dem Steuersignal (7) während der Pulslänge (T) nicht vollständig leitfähig ist,
wobei die Pulslänge (T) der Treibersignalpulsen (18k) über das Regelsignal 19 eingeregelt wird.

2. Steuervorrichtung (4) nach Anspruch 1, wobei die Pulslänge (T) derart einstellbar ist, dass der Halbleiterschalter (1) bei einem Ansteuern mit dem Steuersignal (7) einen vorbestimmten Stromwert aufweist.

3. Steuervorrichtung (4) nach einem der Ansprüche 1 und 2, wobei die Treiberschaltung (15) einen einstellbaren Steuerwiderstand zum Erzeugen des Steuersignals (7) aufweist, und wobei die Ansteuerschaltung (16) dazu ausgelegt ist, in Abhängigkeit von dem Regelsignal (19) ein Stellsignal (20) zum Einstellen des einstellbaren Steuerwiderstands zu erzeugen und in die Treiberschaltung (15) einzuspeisen.

4. Steuervorrichtung (4) nach einem der Ansprüche 1 bis 3, welche zum Ansteuern eines IGBT-Schalters (1) ausgelegt ist.

5. Steuervorrichtung (4) nach einem der Ansprüche 1 bis 4, wobei der Wechselrichter (10) eine Halbbrückenschaltung aufweist, und wobei die Ansteuerschaltung (16) dazu ausgelegt ist, jeweils einen der Halbleiterschalter (1) einer Halbbrücke mit dem Treibersignal (18) anzusteuern und den anderen der Halbleiterschalter (1) der Halbbrücke dauerhaft zu schließen.

6. Antriebssystem (100) für eine n-phasige elektrische Maschine (3), wobei n ≥ 1, mit:
einem Zwischenkreiskondensator (2), welcher mit zwei
Eingangsspannungsanschlüssen (T+; T-) verbunden ist;
einem Wechselrichter (10) mit einer Vielzahl von Halbleiterschaltern (1a, ..., 1f), welcher mit dem Zwischenkreiskondensator (2) gekoppelt ist, aus dem Zwischenkreiskondensator (2) mit elektrischer Energie gespeist wird und dazu ausgelegt ist, eine n-phasige Versorgungsspannung für die elektrische Maschine (3) zu erzeugen;
einer Vielzahl von Steuervorrichtungen (4a, ..., 4f) nach jeweils einem der Ansprüche 1 bis 5, welche jeweils dazu ausgelegt sind, ein Steuersignal (7a, ..., 7f) zum Ansteuern eines der Halbleiterschalter (1a, ..., 1f) des Wechselrichters (10) zu erzeugen; und
einer Steuerregelung (50), welche mit der Vielzahl der Steuervorrichtungen (4a, ..., 4f) gekoppelt ist, und welche dazu ausgelegt ist, Schaltsignale (5a, ..., 5f) für die Halbleiterschalter (1a, ..., 1f) des Wechselrichters (10) zu erzeugen.

7. Antriebssystem (100) nach Anspruch 6, wobei die Halbleiterschalter (1a, ..., 1f) IGBT-Schalter sind.

8. Antriebssystem (100) nach einem der Ansprüche 6 und 7, wobei der Wechselrichter (10) eine Halbbrückenschaltung aufweist, und wobei die Ansteuerschaltung (16) dazu ausgelegt ist, jeweils einen der Halbleiterschalter (1) einer Halbbrücke mit dem Treibersignal (18) anzusteuern und den anderen der Halbleiterschalter (1) der Halbbrücke dauerhaft zu schließen.

9. Verfahren (30) zum Ansteuern eines Wechselrichters (10), mit den Schritten:
Erzeugen (31) eines Treibersignals (18) für zumindest einen der Halbleiterschalter (1a, ..., 1f) des Wechselrichters (10), wobei das Treibersignal (18) eine Folge von Treibersignalpulsen (18k) aufweist; und
Verstärken (32) des Treibersignals (18) zum Erzeugen eines Steuersignals (7a, ..., 7f), welches den zumindest einen Halbleiterschalter (1a, ..., 1f) ansteuert, Erfassen (33a) eines ersten Messsignals (9) für die Zwischenkreisspannung, und Erzeugen (34a) eines Regelsignals (19) zum Regeln der Pulslänge (T) der Treibersignalpulse (18k) in Abhängigkeit von dem ersten Messsignal (9);
und/oder
Erfassen (33b) eines zweiten Messsignals (8) für einen Strom durch den zumindest einen Halbleiterschalter (1a, ..., 1f), und Erzeugen (34b) eines Regelsignals (19) zum Regeln der Pulslänge (T) der Treibersignalpulse (18k) in Abhängigkeit von dem zweiten Messsignal (8),
**dadurch gekennzeichnet, dass**
die Treibersignalpulse (18k) jeweils eine vorbestimmte und einstellbare Pulslänge (T) aufweisen, so dass der Halbleiterschalter (1a, ..., 1f) bei einem Ansteuern mit dem Steuersignal (7a, ..., 7f) während der Pulslänge (T) nicht vollständig leitfähig ist, und wobei die Pulslänge (T) der Treibersignalpulsen (18k) über das Regelsignal 19 eingeregelt wird.

## Claims

1. Control device (4) for actuating a semiconductor switch (1) of an inverter (10), having: an actuation circuit (16) which is designed to generate a driver signal (18) on the basis of a switching signal (5) generated by a control system (50) of the inverter (10); a driver circuit (15) which is coupled between the actuation circuit (16) and a control input (13) of the semiconductor switch (1) and is designed to receive the driver signal (18) and to generate a control signal (7), which actuates the semiconductor switch (1), on the basis of the driver signal (18) and to feed said control signal into the control input (13) of the semiconductor switch (1); and a regulation circuit (17) which is coupled to the actuation circuit (16) and is designed to generate a regulation signal (19) for regulating the driver signal (18) and to feed said regulation signal into the actuation circuit (16), the regulation circuit (17) being designed to record a first measurement signal (9) for the intermediate circuit voltage and to generate the regulation signal (19) on the basis of the first measurement signal (9), and/or the regulation circuit (17) being coupled to a current sensor output (14) of the semiconductor switch (1) and being. designed to record a second measurement signal (8) for a current through the semiconductor switch (1) and to generate the regulation signal (19) on the basis of the second measurement signal (8), **characterized in that** the actuation circuit (16) is designed to generate the driver signal (18) as a sequence of driver signal pulses (18k) with a predetermined and adjustable pulse length (T), with the result that the semiconductor switch (1) is not completely conductive during the pulse length (T) when being actuated with the control signal (7), the pulse length (T) of the driver signal pulses (18k) being regulated via the regulation signal (19).

2. Control device (4) according to Claim 1, the pulse length (T) being able to be adjusted in such a manner that the semiconductor switch (1) has a predetermined current value when being actuated with the control signal (7).

3. Control device (4) according to either of Claims 1 and 2, the driver circuit (15) having an adjustable control resistance for generating the control signal (7), and the actuation circuit (16) being designed to generate an actuating signal (20) for adjusting the adjustable control resistance on the basis of the regulation signal (19) and to feed said actuating signal into the driver circuit (15).

4. Control device (4) according to one of Claims 1 to 3, which is designed to actuate an IGBT switch (1).

5. Control device (4) according to one of Claims 1 to 4, the inverter (10) having a half-bridge circuit, and the actuation circuit (16) being designed to respectively actuate one of the semiconductor switches (1) in a half-bridge with the driver signal (18) and to permanently close the other of the semiconductor switches (1) in the half-bridge.

6. Drive system (100) for an n-phase electrical machine (3), where n ≥ 1, having: an intermediate circuit capacitor (2) which is connected to two input voltage connections (T+; T-); an inverter (10) having a multiplicity of semiconductor switches (1a, ..., 1f), which inverter is coupled to the intermediate circuit capacitor (2), is fed with electrical energy from the intermediate circuit capacitor (2) and is designed to generate an n-phase supply voltage for the electrical machine (3) ; a multiplicity of control devices (4a, ..., 4f) according to each of Claims 1 to 5 which are each designed to generate a control signal (7a, ..., 7f). for actuating one of the semiconductor switches (1a, ..., 1f) of the inverter (10); and a control system (50) which is coupled to the multiplicity of control devices (4a, ..., 4f) and is designed to generate switching signals (5a, ..., 5f) for the semiconductor switches (1a, ..., 1f) of the inverter (10) .

7. Drive system (100) according to Claim 6, the semiconductor switches (1a, ..., 1f) being IGBT switches.

8. Drive system (100) according to either of Claims 6 and 7, the inverter (10) having a half-bridge circuit, and the actuation circuit (16) being designed to respectively actuate one of the semiconductor switches (1) in a half bridge with the driver signal (18) and to permanently close the other of the semiconductor switches (1) in the half-bridge.

9. Method (30) for actuating an inverter (10), having the steps of: generating (31) a driver signal (18) for at least one of the semiconductor switches (1a, ..., 1f) of the inverter (10), the driver signal (18) having a sequence of driver signal pulses (18k); and amplifying (32) the driver signal (18) in order to generate a control signal (7a, ..., 7f) which actuates the at least one semiconductor switch (1a, ..., 1f), recording (33a) a first measurement signal (9) for the intermediate circuit voltage; and generating (34a) a regulation signal (19) for regulating the pulse length (T) of the driver signal pulses (18k) on the basis of the first measurement signal (9); and/or recording (33b) a second measurement signal (8) for a current through the at least one semiconductor switch (1a, ..., 1f), and generating (34b) a regulation signal (19) for regulating the pulse length (T) of the driver signal pulses (18k) on the basis of the second measurement signal (8), **characterized in that** the driver signal pulses (18k) each have a predetermined and adjustable pulse length (T), with the result that the semiconductor switch (1a, ..., 1f) is not completely conductive during the pulse length (T) when being actuated with the control signal (7a, ..., 7f), the pulse length (T) of the driver signal pulses (18k) being regulated via the regulation signal (19).

## Revendications

1. Dispositif de commande (4) destiné à attaquer un commutateur à semiconducteur (1) d'un onduleur (10), comprenant :
un circuit d'attaque (16) qui est conçu pour générer un signal de pilotage (18) en fonction d'un signal de commutation (5) généré par une régulation de commande (50) de l'onduleur (10) ;
un circuit de pilotage (15) qui est connecté entre le circuit d'attaque (16) et une entrée de commande (13) du commutateur à semiconducteur (1) et qui est conçu pour recevoir le signal de pilotage (18) et pour générer, en fonction du signal de pilotage (18), un signal de commande (7) qui attaque le commutateur à semiconducteur (1) et l'injecter dans l'entrée de commande (13) du commutateur à semiconducteur (1) ; et
un circuit de régulation (17) qui est connecté au circuit d'attaque (16) et qui est conçu pour générer un signal de régulation (19) destiné à réguler le signal de pilotage (18) et l'injecter dans le circuit d'attaque (16), le circuit de régulation (17) étant conçu pour acquérir un premier signal de mesure (9) de la tension de circuit intermédiaire et générer le signal de régulation (19) en fonction du premier signal de mesure (9), et/ou
le circuit de régulation (17) étant connecté à une sortie de détecteur de courant (14) du commutateur à semiconducteur (1) et conçu pour acquérir un deuxième signal de mesure (8) d'un courant à travers le commutateur à semiconducteur (1) et générer le signal de régulation (19) en fonction du deuxième signal de mesure (8),
**caractérisé en ce que**
le circuit d'attaque (16) est conçu pour générer le signal de pilotage (18) sous la forme d'impulsions de signal de pilotage (18k) ayant une longueur d'impulsion (T) prédéfinie et réglable, de sorte que le commutateur à semiconducteur (1) ne soit pas entièrement passant pendant la longueur d'impulsion (T) lors d'une attaque avec le signal de commande (7), la longueur d'impulsion (T) des impulsions de signal de pilotage (18k) étant asservie par le biais du signal de régulation (19).

2. Dispositif de commande (4) selon la revendication 1, la longueur d'impulsion (T) étant réglable de telle sorte que le commutateur à semiconducteur (1) présente une valeur de courant prédéfinie lors d'une attaque avec le signal de commande (7).

3. Dispositif de commande (4) selon l'une des revendications 1 et 2, le circuit de pilotage (15) possédant une résistance de commande réglable destinée à générer le signal de commande (7), et le circuit d'attaque (16) étant conçu pour générer, en fonction du signal de régulation (19), un signal de réglage (20) destiné à régler la résistance de commande réglable et à l'injecter dans le circuit de pilotage (15).

4. Dispositif de commande (4) selon l'une des revendications 1 à 3, lequel est conçu pour attaquer un commutateur à IGBT (1).

5. Dispositif de commande (4) selon l'une des revendications 1 à 4, l'onduleur (10) possédant un circuit à demi-pont et le circuit d'attaque (16) étant conçu pour attaquer respectivement l'un des commutateurs à semiconducteur (1) d'un demi-pont avec le signal de pilotage (18) et fermer en permanence l'autre commutateur à semiconducteur (1) du demi-pont.

6. Système d'entraînement (100) pour une machine électrique (3) à n phases, avec n ≥ 1, comprenant :
un condensateur de circuit intermédiaire (2) qui est relié à deux bornes de tension d'entrée (T+ ; T-) ;
un onduleur (10) comprenant une pluralité de commutateurs à semiconducteur (1a, ..., 1f), lequel est relié au condensateur de circuit intermédiaire (2), est alimenté en énergie électrique depuis le condensateur de circuit intermédiaire (2) et est conçu pour générer une tension d'alimentation à n phases pour la machine électrique (3) ;
une pluralité de dispositifs de commande (4a, ..., 4f) respectivement selon l'une des revendications 1 à 5, lesquels sont respectivement conçus pour générer un signal de commande (7a, ..., 7f) destiné à attaquer l'un des commutateurs à semiconducteur (1a, ..., 1f) de l'onduleur (10) ; et
une régulation de commande (50) qui est reliée à la pluralité de dispositifs de commande (4a, ..., 4f) et qui est conçue pour générer des signaux de commutation (5a, ..., 5f) pour les commutateurs à semiconducteur (1a, ..., 1f) de l'onduleur (10).

7. Système d'entraînement (100) selon la revendication 6, les commutateurs à semiconducteur (1a, ..., 1f) étant des commutateurs à IGBT.

8. Système d'entraînement (100) selon l'une des revendications 6 et 7, l'onduleur (10) possédant un circuit à demi-pont et le circuit d'attaque (16) étant conçu pour attaquer respectivement l'un des commutateurs à semiconducteur (1) d'un demi-pont avec le signal de pilotage (18) et fermer en permanence l'autre commutateur à semiconducteur (1) du demi-pont.

9. Procédé (30) pour attaquer un onduleur (10), comprenant les étapes suivantes :
génération (31) d'un signal de pilotage (18) pour au moins l'un des commutateurs à semiconducteur (1a, ..., 1f) de l'onduleur (10), le signal de pilotage (18) possédant une séquence d'impulsions de signal de pilotage (18k) ; et
amplification (32) du signal de pilotage (18) en vue de générer un signal de commande (7a, ..., 7f) qui attaque l'au moins un commutateur à semiconducteur (1a, ..., 1f), acquisition (33a) d'un premier signal de mesure (9) de la tension de circuit intermédiaire et génération (34a) d'un signal de régulation (19) destiné à réguler la longueur d'impulsion (T) des impulsions de signal de pilotage (18k) en fonction du premier signal de mesure (9) ; et/ou
acquisition (33b) d'un deuxième signal de mesure (8) d'un courant à travers l'au moins un commutateur à semiconducteur (1a, ..., 1f) et génération (34b) d'un signal de régulation (19) destiné à réguler la longueur d'impulsion (T) des impulsions de signal de pilotage (18k) en fonction du deuxième signal de mesure (8),
**caractérisé en ce que**
les impulsions de signal de pilotage (18k) possèdent respectivement une longueur d'impulsion (T) prédéfinie et réglable, de sorte que le commutateur à semiconducteur (1a, ..., 1f) ne soit pas entièrement passant pendant la longueur d'impulsion (T) lors d'une attaque avec le signal de commande (7a, ..., 7f), et la longueur d'impulsion (T) des impulsions de signal de pilotage (18k) étant asservie par le biais du signal de régulation (19).
